# EUROPÄISCHE PATENTANMELDUNG

(11) **EP 0 843 428 A2**
(43) Veröffentlichungstag der Anmeldung: **20.05.1998**
(21) Anmeldenummer: 97111260.2
(22) Anmeldetag: 04.07.1997
(51) Int. Cl.: H04H 1/00, H04Q 7/32

(54) **Funkübertragungssystem mit einer Feststation und einer Mobilstation mit Verwendung des COFDM Verfahrens, Verfahren zur Herstellung einer Funkverbindung und Mobilstation zur Durchführung des Verfahrens**

(30) Priorität: 19.11.1996 DE 19647819
(71) Anmelder: ROBERT BOSCH GMBH, 70442 Stuttgart (DE)
(72) Erfinder: Lauterbach, Thomas, 31139 Hildesheim (DE)

(57) **Zusammenfassung**

Es wird ein Verfahren zur Herstellung einer bidirektionalen Verbindung zwischen einer Feststation und mehreren mobilen Stationen vorgeschlagen, daß mit dem digitalen Rundfunk definierten Datenrahmen, sowie Modulierungs- und Codierungsverfahren arbeitet. Die Kommunikation erfolgt dabei über getrennte Uplink- und Downlinkfrequenzblöcke.

## Beschreibung

### Stand der Technik

Die Erfindung geht aus von einem Verfahren zum Herstellen einer Funkverbindung zwischen einer Feststation und mindestens einer mobilen Station, sowie einer Mobilstation zur Durchführung des Verfahrens nach der Gattung der unabhängigen Ansprüche.

Aus der DE 44 25 973 ist ein Verfahren zur Übertragung von Signalen über einen Übertragungskanal bekannt, wobei der Standard des digitalen Rundfunks (DAB), wie er aus dem Standard ETS 300 401 bekannt ist, verwendet wird. In dieser Veröffentlichung wird ein Verfahren vorgestellt, einen Übertragungskanal, der von verschiedenen Signalquellen benutzt wird, auszulasten, indem die Informationen in verschiedenen Zeitschlitzen übertragen werden. Dazu wird in einem Signalisierungsfeld die Aufteilung der Zeitschlitze auf die verschiedenen, datenliefernden Quellen übertragen.

Bei diesem Verfahren handelt es sich um eine Übertragung von einem zentralen Sender an mehrere mobile oder feste Empfänger, wie man sie aus einer typischen Rundfunkübertragung kennt. Die Anpassung der Übertragungsraten der einzelnen Quellen geschieht in bestimmten Zeitabständen und bezieht sich auf die Auslastung des Übertragungskanals durch verschiedene Datenanbieter.

### Vorteile der Erfindung

Das erfindungsgemäße Verfahren mit den kennzeichnenden Merkmalen des unabhängigen Anspruchs hat demgegenüber den Vorteil, daß die für den digitalen Rundfunk geschaffene Struktur der Datenrahmen und das im digitalen Rundfunk angewendete Modulations- und Codierverfahren für den Aufbau einer bidirektionalen Verbindung zwischen einer Feststation und mindestens einer mobilen Station benutzt wird. Dazu werden vorteilhafterweise Frequenzen für die Übertragung von der Feststation zur mobilen Station (Downlink) und Frequenzen für die Übertragung von der mobilen Station zur Feststation (Uplink) festgelegt. Mit diesem Verfahren wird die große Übertragungskapazität des DAB-Verfahrens aufgrund der großen Bandbreite benutzt, um auch komplexe Multimediaobjekte zu übermitteln. Damit können große Datenraten, wie sie z.B. bei der Übertragung ganzer Bilder, komplexer Texte, Tonfolgen oder Filmsequenzen usw. anfallen, übertragen werden.

Durch die in den Unteransprüchen aufgeführten Maßnahmen sind vorteilhafte Weiterbildungen und Verbesserungen des im unabhängigen Anspruch angegebenen Verfahrens möglich.

Besonders vorteilhaft ist es, daß sich im DAB-Verfahren die mobile Station auf das Nullsymbol im Datenrahmen des Signals der Feststation synchronisieren kann. Zugleich wird sich die Mobilstation auf die Frequenz, die die Feststation zur Übertragung gewählt hat, einstellen.

Es ist weiterhin von Vorteil, daß der Kommunikationskanal von mobiler Station zur Feststation über eine zuvor fest definierte, zweite Frequenz läuft.

In einem weiteren vorteilhaften Verfahren erfolgt die Kommunikation der mobilen Station zur Feststation auf der zweiten Frequenz, die allerdings erst nach dem Verbindungsaufbau von der Feststation an die mobile Station übermittelt wird. Ein solcher Kommunikationsaufbau erlaubt eine flexible Nutzung der möglichen Frequenzen. Vorteilhafter Weise wird die Information zur zweiten Frequenz im Datenfeld FIC (Fast-Information-Channel) übertragen.

Um sich bei der Feststation anzumelden muß die Mobilstation eine Kennung senden. Vorteilhafter Weise sendet sie diese Kennung innerhalb des Nullsymbols ihres Datenrahmens.

Vorteilhafter Weise besteht die von der mobilen Station ausgesendete Kennung aus einem TII (Transmitter Identification Information)-Signal. Die Codierung dieses Signals ist bereits im Standard des DAB-Verfahrens definiert und erlaubt insgesamt 1.680 verschiedene Codierungen. Mit Hilfe dieses Signals ist es mit hoher Wahrscheinlichkeit möglich, daß sich Mobilstationen erfolgreich bei einer Feststation anmelden. Die Auswahl des TII-Signals erfolgt dabei zufällig in der Mobilstation.

Es ist von Vorteil, wenn die Feststation nach der Anmeldung der Mobilstation für jede der bei ihr angemeldeten Mobilstationen eine Identifikationsnummer vergibt. Diese Identifikationsnummer ordnet gleichzeitig den Zeitschlitz zu, in dem Daten von der Mobilstation zur Feststation übertragen werden können. Eine vorteilhafte Ausbildung ist es, daß die Zeitschlitze durch Zahlen gekennzeichnet sind, die im FIC-Datenfeld des Datenrahmen übertragen werden.

Die erfindungsgemäße Mobilstation mit den kennzeichnenden Merkmalen des unabhängigen Anspruchs hat den Vorteil, daß sie ihre Sendefrequenz mit Hilfe eines Lokaloszillators regeln kann. Damit ist es ihr auf einfacher Weise möglich, sich an die Sendefrequenz anzupassen, die entweder durch ein Kanalschema fest vorgegeben ist, oder durch die Feststation übermittelt wird.

### Zeichnung

Ausführungsbeispiel der Erfindung ist in den Zeichnungen dargestellt und in der nachfolgenden Beschreibung näher erläutert. Es zeigen Figur 1 ein räumliches Beispiel für die bidirektionale Verbindung, Figur 2 den Datenrahmen eines DAB-Signals, Figur 3 den Verbindungsaufbau zwischen Feststation und mobiler Station, Figur 4 der Ablauf eines Verbindungsaufbaus und Fig.5 eine Mobilstation.

### Beschreibung des Ausführungsbeispiels

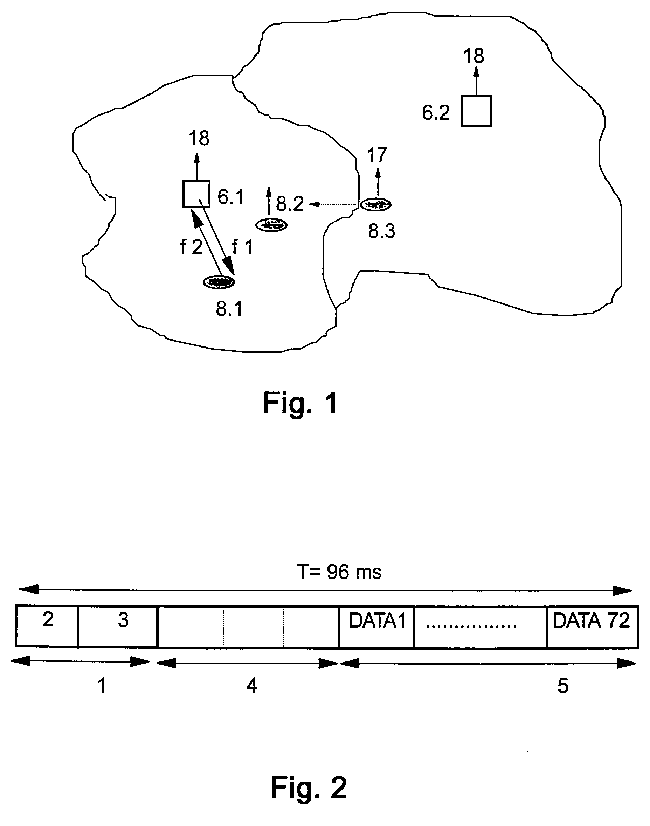

Figur 1 zeigt die Aufteilung eines Sendegebietes in zwei verschiedene Bereiche, in denen nach dem DAB-Verfahren übertragen wird. Das DAB-Verfahren verwendet mehrere Frequenzträger, wobei das Signal im Orthogonal Frequency Division Multiplex (OFDM) auf die Träger aufmoduliert wird. Dazu wird das zu sendende Signal in eine Vielzahl von Bitströmen aufgeteilt, die den einzelnen, orthogonalen Trägern aufmoduliert werden. Es wird ein DQPSK (Differential Quaternary Phase Shift Keying)-Verfahren angewendet. Bezüglich des genauen Verfahrens wird nochmals ausdrücklich auf den Standard ETS 300 401 hingewiesen.
Ein bidirektionales DAB-Übertragungsnetz besteht aus einer Anzahl von Feststationen 6.1 und 6.2, die jeweils eine Funkzelle bedienen. Die Feststationen senden und empfangen über die Antenne 18. Jeder Funkzelle ist ein Frequenzkanal zugeordnet, wobei die Frequenzplanung so durchzuführen ist, daß sich räumlich benachbarte Funkzellen nicht gegenseitig stören. Jeder Kanal besteht aus mehreren Uplinkfrequenzen f2, auf denen die Feststation empfängt, und aus einer oder mehreren Downlink-Frequenzen f1, auf denen die Feststation 6.1 sendet. Innerhalb der Funkzelle können sich mehrere mobile Stationen 8.1, 8.2 befinden, die auf der Uplink-Frequenz f2 mit der Feststation 6.1 kommunizieren wollen, wobei die Signale über die Antennen 17 empfangen und gesendet werden. Die Frequenzen f1 und f2 kennzeichnen die Mittenfrequenz des Frequenzkamms, der nach dem DAB-Verfahren als Träger dient. Eine Mobilstation 8 meldet sich bei der Feststation 6 dann an, wenn die mobile Station innerhalb einer Funkzelle eingeschaltet wird, oder wie im Beispiel der mobilen Station 8.3, die mobile Station in eine Nachbarfunkzelle einfährt, wie es der gestrichelte Pfeil zeigt, und mit einer anderen Feststation 6.1 Kommunikation aufnehmen muß.

Die Kommunikation findet innerhalb des DAB-Verfahrens statt. Der Datenrahmen teilt sich nach Fig. 2 auf in den Synchronisationskanal 1, den Fast-Information-Channel 4 und den Main-Service-Channel 5. Innerhalb des Synchronisationssymbols wird das Nullsymbol 2 sowie das Phasenreferenzsymbol 3 übertragen. Im Fast-Information-Channel (FIC) werden Informationen zu den nachfolgend übertragenen Daten gesendet. Im Beispiel DAB-Mode I werden 72 OFDM-Symbole für den eigentlichen Nutzkanal MSC Main Services-Channel übertragen.

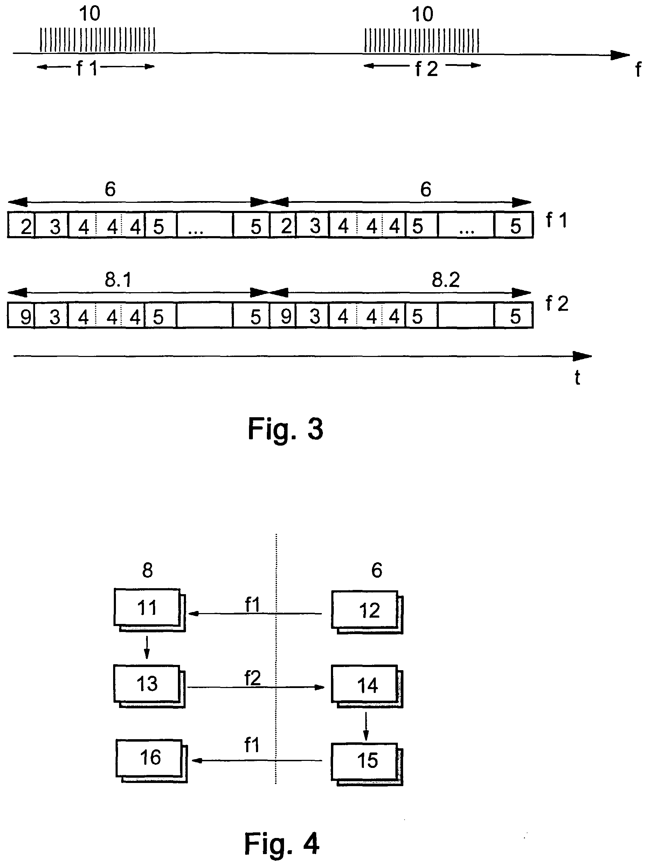

Dieser Datenrahmen wird nach Fig. 3 im Up- und Downlink über das OFDM auf die Trägerfrequenzen 10, die einen DAB-Block darstellen, aufmoduliert. Die Träger liegen bei den Mittenfrequenzen f1 und f2, z.B. im Transmission Mode I unterhalb 375 MHz mit einer Bandbreite von 1,536 MHz. In Figur 3 werden die Datenrahmen für die Downlink-Frequenz f1 sowie für die Uplink-Frequenz f2 dargestellt. Die Feststation 6 überträgt kontinuierlich ihren Datenrahmen mit Nullsymbol 2, Phasenreferenz 3, den FIC-Informationen 4 sowie den Datenblöcken 5. Die Mobilstationen senden eine individuelle Kennung 9 während des Nullsymbols und ebenfalls Phasenreferenzsymbol 3, FIC 4 und Daten 5.

Für den Verbindungsaufbau nach Fig. 4 synchronisiert sich eine neu hinzukommende Mobilstation 8 im Schritt 11 auf den von der Feststation 6 vorgegebenen Datenrahmen, der von der Feststation 6 nach Schritt 12 kontinuierlich abgestrahlt wird. Um sich bei der Feststation anzumelden, strahlt die Mobilstation zunächst im Schritt 13 während des Nullsymbols das TII (Transmitter-Identification-Information)-Signal ab. Dieses TII-Signal ist in der DAB-Spezifikation definiert und besteht aus acht möglichen Trägerpaaren auf 24 Kanälen, von denen jeweils vier ausgetastet sind. Die Codierung erfolgt über die Frequenzkammnummer c und das Frequenzkammmuster p. Insgesamt sind 1680 unterscheidbare TII-Signale (im Mode II) möglich. Meldet sich nun eine neue mobile Station in einer Funkzelle bei der Feststation an, werden im Anmeldeschritt alle möglichen Downlink-Frequenzen f1 der Feststation geprüft, bis die Mobilstation im Schritt 12 ein Signal mit guter Signalstärke gefunden hat. Damit ist eine erste Frequenz für das Übertragungsverfahren festgelegt.
Bei einem festen Kanalschema ist der Mobilstation aus der Kenntnis der Downlink-Frequenz auch die Uplink-Frequenz bekannt. Wählt man ein Übertragungsverfahren mit einem flexiblen Kanalschema dekodiert die Mobilstation den FIC im Datenrahmen der Feststation, um die darin übertragenen Uplink-Frequenzen auslesen zu können. Daraufhin beginnt die Mobilstation im Schritt 13 auf dem jetzt bekannten Frequenzkanal f2 zur Feststation zu senden. Als erstes beginnt sie mit der Aussendung eines in der Mobilstation zufällig ausgewählten TII-Musters. Die Abstrahlung des zufälligen TII-Musters erfolgt während des Nullsymbols der Basisstation 6. Die Feststation empfängt im Schritt 14 während des Nullsymbols die TII-Signale und teilt im Schritt 15 im FIC eines der folgenden Datenrahmen den empfangenen Mobilstationen eine Identifikationsnummer zu. Diese im Schritt 16 empfangene Identifikationsnummer ist mit einem Zeitschlitz korreliert, in dem die Mobilstation auf der Uplink-Frequenz f2 senden darf. Die Mobilstation sendet ihre Kennung ebenfalls im FIC, sowie ihre Daten in dem ihr zugeteilten Zeitschlitz. Die Feststation antwortet entsprechend. Damit ist die Verbindung hergestellt.

Sollte eine Anmeldung einer Mobilstation nach dem einmaligen Aussenden der TII-Kennung nicht möglich sein, wird die Ausstrahlung dieser Kennung immer im Nullsymbol der Feststation wiederholt, bis eine erfolgreiche Anmeldung durchgeführt ist. Sollten zwei Mobilstationen dieselbe TII-Kennung ausstrahlen, ist eine erfolgreiche Anmeldung nicht möglich. Der Anmeldevorgang wird dann unterbrochen und eine neue, zufällige TII-Kennung ausgewählt. Allerdings ist es sehr unwahrscheinlich, wegen der hohen Anzahl der Kombinationen, daß zwei Mobilstationen in einer Funkzelle dieselbe Kennung zum selben Zeitpunkt ausstrahlen.

Die Zeitschlitze werden durch das Argument eines Zählers gekennzeichnet, das die Basisstation im FIC überträgt.

Da die Anmeldung neuer Mobilstationen an der Feststation über Ausstrahlung der TII-Kennungen während des Nullsymbols im Datenrahmen der Feststation erfolgt, wird die Kapazität des Rückkanals optimiert. Es werden für die Anmeldung neuer Stationen keine leeren Zeitschlitze vorgesehen, die die Übertragungskapazität vermindern. Eine Anmeldung ist in jedem Datenrahmen möglich.

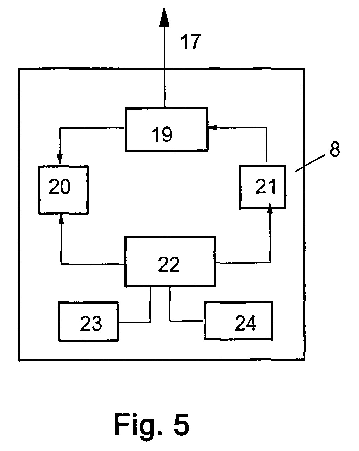

Die erfindungsgemäße Mobilstation nach Fig. 5 weist alle Schaltungen auf, die es ihr ermöglicht, nach dem DAB-Verfahren gesendete Signale zu empfangen und Signale zu senden. Die Signale werden über die Antenne 17 empfangen und in den Duplexer 19 weitergeleitet. Der Duplexer steht mit dem Empfänger 20 in Verbindung, der wiederum vom Controller 22 überwacht wird. Der Controller steuert den Speicher 23 und den lokalen Oszillator 24, der für die Abstimmung der Eingangsfrequenz dient. Um sich auf die Downlink-Frequenzen abzustimmen, regelt die Mobilstation 8 ihren Empfangskanal mithilfe des vom Controller 22 gesteuerten lokalen Oszillators 24 solange nach, bis sie ein Signal guter Signalstärke gefunden hat. Aus einem empfangenen Signal leitet die Mobilstation aus dem gespeicherten Kanalraster bzw. aus dem FIC der Feststation die geforderte Uplink-Frequenz ab, die für den Verbindungsaufbau gewünscht wird. Die Sendefrequenz wird über den lokalen Oszillator 24 der Station genau abgestimmt, wobei der Frequenzfehler Δf sehr viel kleiner als der Unterträgerabstand im DAB-Frequenzkamm sein muß. Das Ausgangssignal wird über den Sender 21 auf Duplexer 19 und Antenne 17 gegeben.

## Patentansprüche

1. Verfahren zum Herstellen einer Funkverbindung zwischen einer Feststation (6) und mindestens einer mobilen Station (8), wobei digitale Daten in einem Datenrahmen mit einem Synchronisationskanal (1), Fast-Information-Kanal (4) und Datenkanal (5) und gemäß des COFDM-Verfahrens übertragen werden, dadurch gekennzeichnet, daß eine bidirektionale Verbindung zwischen der Feststation (6) und den mobilen Stationen (8) aufgebaut wird und für die Übertragung von Daten von der mobilen Station (8) zur Feststation (6) mindestens ein erster Frequenzblock (10) und für die Übertragung von der Feststation (6) zur mobilen Station (8) mindestens ein zweiter Frequenzblock (10) festgelegt werden.

2. Verfahren zum Herstellen einer Funkverbindung nach Anspruch 1, dadurch gekennzeichnet, daß sich die mobilen Stationen (8) auf den ersten Frequenzblock (10) und den Datenrahmen des Signals der Feststation (6) synchronisieren.

3. Verfahren zum Herstellen einer Funkverbindung nach Anspruch 2, dadurch gekennzeichnet, daß sich die mobilen Stationen (8) auf das Nullsymbol (2) innerhalb des Synchronisationskanals (1) des Datenrahmens der Feststation (6) synchronisieren.

4. Verfahren zum Herstellen einer Funkverbindung nach einem der vorhergehenden Ansprüche, dadurch gekennzeichnet, daß die mobile Station (8) nach einem festen Kanalschema auf dem zuvor definierten zweiten Frequenzblock (f2) mit der Aussendung ihrer Daten beginnt.

5. Verfahren zum Herstellen einer Funkverbindung nach einem der vorhergehenden Ansprüche, dadurch gekennzeichnet, daß die mobile Station (8) aus den von der Feststation (6) gesendeten Informationen die Frequenz des zweiten Frequenzblocks zum Verbindungsaufbau zur Feststation entnimmt und mit der Aussendung ihrer Daten beginnt.

6. Verfahren zum Herstellen einer Funkverbindung nach einem der vorhergehenden Ansprüche, dadurch gekennzeichnet, daß die Frequenz des zweiten Frequenzblocks zum Verbindungsaufbau von mobiler Station (8) zur Feststation (6) im Fast-Information-Kanal (4) des Datenrahmens übertragen wird.

7. Verfahren zum Herstellen einer Funkverbindung nach einem der vorhergehenden Ansprüche, dadurch gekennzeichnet, daß die mobile Station (8) zum Verbindungsaufbau eine individuelle Kennung im Nullsymbol (2) des Datenrahmens sendet.

8. Verfahren zum Herstellen einer Funkverbindung nach einem der vorhergehenden Ansprüche, dadurch gekennzeichnet, daß die im Nullsymbol (2) des Datenrahmens übertragene Kennung aus einem Transmitter-Identification-Information-Code besteht.

9. Verfahren zum Herstellen einer Funkverbindung nach einem der vorhergehenden Ansprüche, dadurch gekennzeichnet, daß die Feststation (6) nach Empfang der Kennung eine Identifikationsnummer vergibt, die einem Zeitschlitz im Datenkanal (5) des Datenrahmens zugeordnet ist.

10. Verfahren zum Herstellen einer Funkverbindung nach einem der vorhergehenden Ansprüche, dadurch gekennzeichnet, daß die Zeitschlitze durch eine Zahl gekennzeichnet sind, die im Fast-Informations-Kanal (4) des Datenrahmens der Feststation (6) übertragen wird.

11. Mobilstation zur Durchführung des Verfahrens nach Anspruch 1 bis 10 mit einer Antenne (17) und einem mit ihr verbundenen Duplexer (19), sowie einer Sende- (21) und Empfangseinheit (20), die mit dem Duplexer (19) und einem Controller (22) mit zugehörigem Speichermittel (23) verbunden sind, dadurch gekennzeichnet, daß der Controller (22) einen lokalen Oszillator (24) steuert, der sowohl Empfangs- als auch Sendefrequenzen nach Vorgaben des Controllers modifiziert.
